Europäisches Patentamt

European Patent Office

Office européen des brevets

(11) Publication number: **0 157 479**
**B1**

# (12) EUROPEAN PATENT SPECIFICATION

(45) Date of publication of patent specification: **19.07.89**

(21) Application number: **85300975.1**

(22) Date of filing: **14.02.85**

(51) Int. Cl.⁴: **F 16 B 4/00, F 02 F 7/00, F 02 F 3/00, F 01 L 1/14, F 01 D 5/00**

(54) A metal ceramics composite article and a process for manufacturing the same.

(30) Priority: **29.03.84 JP 59524/84**
**03.08.84 JP 162790/84**
**15.08.84 JP 169254/84**

(43) Date of publication of application:
**09.10.85 Bulletin 85/41**

(45) Publication of the grant of the patent:
**19.07.89 Bulletin 89/29**

(84) Designated Contracting States:
**DE FR GB IT SE**

(56) References cited:
**EP-A-0 139 406**
**EP-A-0 142 334**
**DE-C- 897 377**

**ASM, "METALS HANDBOOK", Properties and selections: stainless steels, tool materials and special purpose metals, vol. 3, 1980, pages 446,447, 9th edition, American Society for Metals, Ohio, US**

(73) Proprietor: **NGK INSULATORS, LTD.**
**2-56, Suda-cho, Mizuho-ku**
**Nagoya-shi, Aichi 467 (JP)**

(72) Inventor: **Tsuno, Nobuo**
**505-105, 3-6 Iwanaridai 8-chome**
**Kasugai City (JP)**
Inventor: **Matsui, Minoru**
**93, Yashirodai 1-chome**
**Meito-Ku Nagoya City (JP)**

(74) Representative: **Paget, Hugh Charles Edward et al**
**MEWBURN ELLIS & CO. 2/3 Cursitor Street**
**London EC4A 1BQ (GB)**

Courier Press, Leamington Spa, England.

## Description

The present invention relates to a metal-ceramics composite article and a process for manufacturing the same. More specifically, the invention relates to a metal-ceramics composite article in which a metallic member and a ceramic member are joined together by fitting.

Since a ceramics is not only hard and excellent in wear resistance, but also excellent in mechanical characteristics and corrosion resistance at a high temperature, it is suitable as a structural material of the rotors of the gas turbine and the turbocharger which require mechanical strength and wear resistance at a high temperature. For this reason, gas turbine rotors and turbocharger rotors made of ceramics have been investigated. For instance US—A—4,396,445 discloses a turbine rotor having the structure in which blade portions and a shaft are made of ceramics. A threaded portion is formed at one end of the ceramic shaft, and a metallic impeller of a compressor is attached to the threaded portion. However, such a turbine has the drawback that the threaded portion of the ceramic shaft is broken due to the difference in the thermal expansion between the metallic material constituting the impellers of the compressor and the ceramic material constituting the shaft portion when the turbine rotor is in use. Further, it also has the drawback that the screw thread cutting of the ceramics is a difficult technique, which requires time and cost.

As the countermeasures against such drawbacks, there is disclosed in Japanese Utility Model Registration Application Laid-Open No. 92,097/1982 a structure in which a cylindrical portion formed at an end of a metallic shaft is fitted with a ceramic shaft of a turbine rotor. However, this structure has the disadvantages that when the ceramic shaft is fitted into the metallic shaft after the outer surface of the cylindrical portion of the metallic shaft is surface-hardened to increase the wear resistance of a bearing-contact surface of the metallic shaft, cracks are produced at the surface-hardened portion of the metallic shaft. Moreover, when the surface of the metallic shaft is subjected to a surface hardening treatment such as nitriding treatment after the metallic shaft and the ceramic shaft are fitted together, the tightness at the fitting portion decreases or the fitted metallic shaft slips out from the fitting portion. In addition, when quenching is carried out after the metallic shaft and the ceramic shaft are fitted together, the ceramic shaft slips out from the fitted portion of the metallic shaft due to the phase transformation of the metallic shaft owing to the quenching. Therefore, the above structure has the drawback that, since the wear resistance is poor at the bearing-contact surface of the metallic shaft, it can not be practically used.

It is therefore an object of the present invention to provide a metal-ceramics composite article which has a firm joint between a ceramic shaft of a turbine rotor or the like and a metallic shaft fitted thereto without suffering from slackness or slip-out.

More specifically, the object of the present invention is to provide a metal-ceramics composite article having good tightness.

It is still another object of the present invention to provide a metal-ceramics composite article having good wear resistance at the surface of a metallic portion.

It is a further object of the present invention to provide a process for manufacturing such metal ceramics composite articles.

The present invention is set out in claims 1 and 10.

Embodiments of the invention are given in the following description in conjunction with the attached drawings, in which:—

Figs. 1 and 2 are schematic views showing vertical sections of embodiments of the metal-ceramics composite article according to the present invention;

Fig. 3 is a schematic view showing a press-fitted portion of a turbocharger rotor embodying the present invention;

Fig. 4 is a schematic view showing a section of a heat insulating engine piston as an example in which the metal-ceramics composite article according to the present invention is used in combination with another metallic member;

Fig. 5—6 are schematic views illustrating sections of tappets as other examples in which the metal-ceramics composite article according to the present invention is used in combination with another metallic member;

Fig. 7 is a schematic view illustrating a structure in section of a further embodiment of the metal-ceramics composite article according to the present invention; and

Fig. 8 is a schematic view illustrating an extracting test method for the metal-ceramics composite article according to the present invention.

According to the present invention, a recess or hole is formed in a metallic member made of a precipitation hardening alloy in a non-hardened state, and a projection formed in a ceramic member is fitted into the recess or hole to form a metal-ceramics composite body. Thereafter, the composite body is heated at a precipitation hardening temperature to harden the metallic member. If the metallic member is hardened prior to the fitting of the metallic member and the ceramic member, the metallic member and/or the ceramic member is broken in fitting of the members. Thus, it is unfavorable.

The fitting of the ceramic member and the metallic member which both constitute the metal-ceramics composite article according to the present invention is suitably performed by any one of shrinkage fitting, expansion fitting and press fitting. Shrinkage fitting and expansion fitting are desirable in the case where the metal-ceramics composite article has a large diameter fitting portion, because in the shrinkage fitting and the expansion fitting, the diameter of the projection of the ceramic member is made larger than the inner diameter of the hole of the metallic member, either one of the members to be fitted together is heated or cooled to produce the difference in diameter therebetween which allows the insertion of the ceramic member into the metallic member, and then the members are fitted together by utilizing this dimensional difference. Since a metallic material generally has a larger coefficient of thermal expansion than a ceramic material, a larger dimensional difference can be obtained by a smaller temperature difference in the case of the shrinkage fitting in which the metallic member is heated, so that a stable fitting is possible. Thus, such as shrinkage fitting is more preferable. The interference in the shrinkage fitting and the expansion fitting may be set at such an amount that the hole portion of the metallic member and the projection of the ceramic member may not be broken after the fitting and that enough tightness required at the fitting portion under conditions of use of the metal-ceramics composite article according to the present invention can be obtained.

On the other hand, press fitting is a method in which the projection of the ceramic member is forcedly pushed and fitted into the hole formed in the metallic member which hole has a smaller diameter than that of the projection under application of a load. Since the dimensional difference between the diameter of the projection and the inner diameter of the hole is absorbed by the elastic deformation and plastic deformation of the metallic member, the tolerance in finish dimension between the projection and the hole prior to the fitting may be larger than in the case of the shrinkage fitting and the expansion fitting. For this reason, press fitting is more preferable as the fitting method of the metal-ceramics composite article having a small fitting portion. The shape and the dimension of the hole of the metallic member and the projection of the ceramic member are so set that the hole portion and the projection are not broken by the load acting upon them in the press fitting. The dimensional difference between the diameter of the projection and the inner diameter of the hole is so set that the fitting portion has enough tightness required to meet the conditions of use of the metal-ceramics composite article according to the present invention and that both the projection and the hole portion are not broken in the press fitting. To attain this, the dimensional difference between the diameter of the projection of the ceramic member and the inner diameter of the hole of the metallic member is desirably such that the diameter of the projection is larger by from 0.1 to 10%, preferably by from 1% to 5%, than the inner diameter of the hole. If the dimensional difference is smaller than 0.1%, tightness at the press fitting portion is lacking, so that the fitting portion may be disengaged during use. If the dimensional difference is larger than 10%, the load necessary for the press fitting becomes too large, thereby unfavorably causing the projection of the ceramic member to be broken in the press fitting. The press fitting may be performed at room temperature, or may be done while the metallic member is heated alone or both the metallic member and the ceramic member are heated. However, the method in which the press fitting is carried out while both the members are heated is most preferable. For, when the members are both heated, the deformation resistance of the metallic member is decreased, reducing the load required in the press fitting, so that no fracture of the members occurs, and tightness is increased due to the difference in the thermal expansion between them during the cooling from the press fitting temperature. The heating temperature of the metallic member in the case of the shrinkage fitting for fitting both the members together and that of both the members in the press fitting are preferably lower than the precipitation hardening temperature of the metallic member and not lower than a temperature to which the joint portion of the metal-ceramics composite article is to be subjected in use.

When the metallic member and the ceramic member are fitted together by shrinkage fitting, a deformation proportional to the interference‐is produced at the metallic member. When the heating temperature of the metallic member is higher than the precipitation hardening temperature thereof, the metallic member is hardened during heating and its ductility is decreased, so that the metallic member is broken during cooling from the temperature at which the shrinkage fitting is performed. Thus, such a heating is unfavorable. Further, when the metallic member and the ceramic member are fitted together by press fitting, if the members are both heated up to a temperature higher than the precipitation hardening temperature, the metallic member is hardened so that the metallic member cannot be deformed to cause the metallic member and/or the ceramic member to be broken. Thus, such a heating is also unfavorable.

On the other hand, when the press fitting temperature is lower than the temperature to which the fitting portion of the metal-ceramics composite article is to be subjected in use, and the temperature of the fitting portion is increased up to the use temperature, unfavorably, the press fitting portion is loosened to lower the tightness. In the process of the present invention, preferably the metallic member and the ceramic member are fitted together, and the precipitation hardening treatment is performed while they are heated up to a predetermined temperature to harden the metallic member. Therefore, as the metallic material constituting the metallic member, use may be made of an alloy which can be hardened through precipitation. It is particularly preferable that when the metallic member is constituted by a precipitation hardening alloy which contracts in volume through the precipitation hardening treatment, the tightness of the fitting portion is increased with the shrinkage of the metallic member in the precipitation hardening treatment so that the tightness between the two members is increased. As the precipitation hardening alloy which is shrunk by the precipitation hardening treatment, mention may be made of, for instance, maraging steel, a precipitation-hardenable stainless steel, a precipitation-hardenable super alloy and the like. Thus, choice may be selectively made among these to meet an intended use. Other than the above, any alloy may be used so long as it meets the objects of the present invention.

EP 0 157 479 B1

As the ceramic material constituting the metal-ceramics composite article according to the present invention, selection may be made among from silicon nitride, silicon carbide, partially stabilized zirconia, alumina, beryllia, sialon and the like depending upon an intended use of the metal-ceramics composite article. For instance, in a turbocharger rotor, a turbine wheel which is subjected to a high temperature and a rotation shaft extending thereto are preferably made of silicon nitride having a large strength at a high temperature. On the other hand, in a tappet in which a cam-contacting surface is made of ceramics, partially stabilized zirconia having a high strength and a high toughness is preferred as the ceramic material. Further, in a heat insulating engine piston in which piston the crown portion is made of ceramics, partially stabilized zirconia having a coefficient of thermal expansion near to that of cast iron constituting the piston body or silicon nitride having a large thermal shock resistance is desirable as the ceramic material.

In order to improve the wear resistance of the surface of the metallic member of the metal-ceramics composite article according to the present invention, the hardness of the surface of the metallic member may be further increased by nitriding treatment. The nitriding treatment of the surface of the metallic member may be performed after, simultaneously with, or prior to the precipitation hardening treatment. For instance, in the case that the metallic member is made of an alloy in which the precipitation hardening temperature and the nitriding treatment temperature are equal, it is preferable to simultaneously perform the precipitation hardening treatment and the nitriding treatment. On the other hand, when the metallic member is made of an alloy in which the precipitation hardening temperature is higher than the nitriding treatment temperature, it is preferable to perform the precipitation hardening treatment with the nitriding treatment separately.

The invention will be illustrated more in detail with reference to the attached drawings.

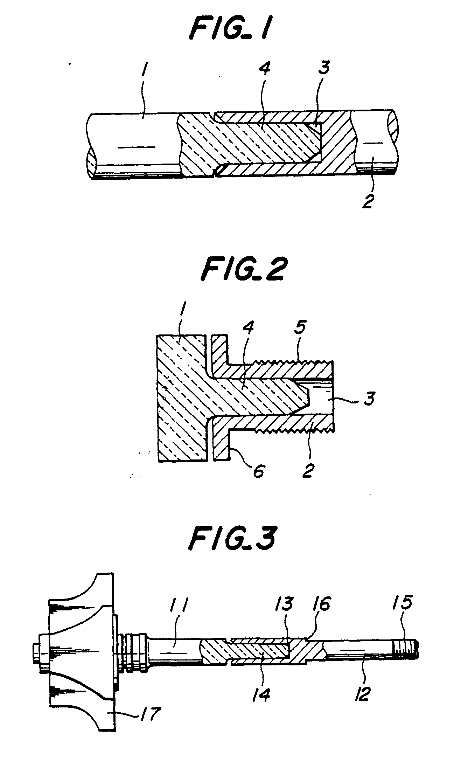

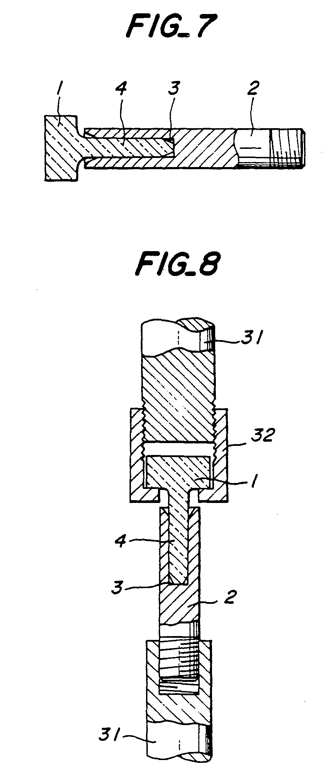

Fig. 1—7 illustrate embodiments of the metal-ceramics composite article according to the present invention. Fig. 8 illustrates a testing method for the present invention.

Fig. 1 is a vertically sectional view of a metal-ceramics composite article in which a projection 4 formed at a ceramic member 1 is fitted into a hole 3 formed at the metallic member 2.

Fig. 2 is a structural example of another metal-ceramics composite article in which a projection 4 of a ceramic member 1 is press fitted into a hole 3 of a cylindrical metallic member 2 having at one end of the barrel thereof a flange 6 larger in diameter than the barrel portion. When another metallic member is assembled around the barrel portion and is secured thereto by means of a threaded portion 5, the flange 6 prevents the metallic member around the barrel portion from being brought into direct contact with the ceramic member and the flange 6 also prevents the stress caused by tightening the threaded portion and the stress due to the difference in the coefficient of thermal expansion between the barrel portion and the metallic member assembled around the barrel portion from being imposed upon the ceramic member.

Fig. 3 is a turbocharger rotor in which a projection 14 formed at the tip end of a rotary shaft 11 which is formed integrally with a turbine wheel 17 made of ceramics is press fitted into a hole 13 formed at the tip end 12 of a rotary shaft made of precipitation hardening alloy on the side of a compressor wheel. When a bearing incorporated into the shaft on the side of the compressor wheel and the compressor wheel (both being not shown) are secured together by means of a nut, a stepped portion 16 is provided to prevent the axial force acting upon the shaft and the stress due to the difference in the thermal expansion between the aluminum alloy compressor wheel and the precipitation hardening alloy shaft 12 from acting upon the ceramic rotary shaft.

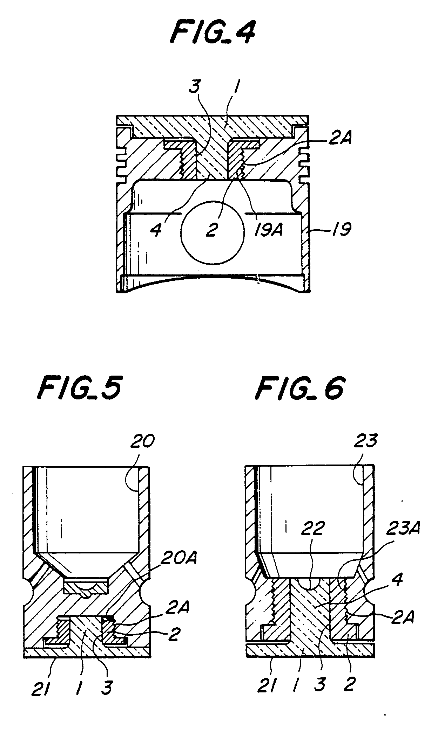

Figs. 4, 5 and 6 show a heat insulating piston and tappets as examples in which another metallic member is joined to the metallic-ceramics composite article according to the present invention. A projection 4 formed at a ceramic member and having a larger diameter than that of the through hole 3 formed at the metallic member 2 is fitted to this through hole, by utilizing a threaded portion 2A formed at the outer periphery of the barrel of the metal-ceramics composite article.

Fig. 4 shows a heat insulating engine piston having a piston crown and a piston body made of ceramics and a metal respectively, wherein a hollow space partially including a through hole into which the metal-ceramics composite article according to the present invention is to be inserted is formed at the piston crown portion of a metal piston 19, and the metal-ceramics composite article is inserted into this hollow space, and they are fixed by means of a threaded portion 19A formed at the through hole and a threaded portion 2A formed in the metal-ceramics composite article.

Fig. 5 is a tappet having a cam-contacting surface 21 made of ceramics, wherein a hollow space into which the metal-ceramics composite article according to the present invention is formed at the cam-contacting surface of a metallic tappet 20, the metal-ceramics composite article according to the present invention is inserted into the hollow space, and they are fixed by means of a threaded portion 20A formed at the hollow space and a threaded portion 2A formed at the metal-ceramics composite article.

Fig. 6 is a tappet having a cam-contacting surface 21 and a push rod-contacting surface 22 made of ceramics, wherein a through hole into which the metal-ceramics composite article according to the present invention is to be inserted is formed at a cam-contacting surface of a metallic tappet 23, the metal-ceramics composite article is inserted into the through hole, and they are fixed by means of a threaded portion 23A formed at the through hole and a threaded portion 2A formed at the outer periphery of the metal-ceramics composite article.

4

The present invention will be further illustrated by specific examples, which are merely illustrative of the invention and do not limit the scope thereof.

## Example 1

A ceramic member 1 having a projection 4 of a diameter specified in Table 1 and 25 mm in length was formed from a round bar of silicon nitride produced according to the pressureless sintering method (hereinafter referred to briefly as "silicon nitride"). A metallic member 2 having a barrel diameter shown in Table 1 was formed from a round bar of a solution-treated maraging steel made by Hitachi Kinzoku Company Limited (trade name: YAG-300) in which a hole 3 having an inner diameter shown in Table 1 and a depth of 19 mm was formed at one end of the round bar and a threaded portion was formed at the other end.

The projection of the ceramic member was fitted into the hole of the metallic member according to the method and at the temperature shown in Table 1 to form a metal-ceramics composite body shown in Fig. 7. The thus obtained metal-ceramics composite body was heated at 500°C for 3 hours to effect the precipitation hardening treatment, thereby hardening the metallic member of the composite body.

Then, the fitting portion of the composite member was machined to an outer diameter shown in Table 1, and the ceramic member and the metallic member were vertically pulled by using a jig shown in Fig. 8 while being maintained at 350°C in a heating furnace. The load necessary for disengaging the fitting portion by extraction was measured, and results obtained are shown in Table 1.

Table 1(a)

| Sample | No. | Fitting method | Diameter of projection of ceramic member (mm) | Inner diameter of hole of metallic member (mm) | Dimensional difference (%) | Finish outer diameter of fitting portion (mm) | Fitting temperature (°C) | Time period in precipitation hardening | |
|---|---|---|---|---|---|---|---|---|---|
| | | | | | | | | Before fitting | After fitting |
| Preferred examples of the present invention | 1 | shrinkage fitting | 10.0 | 9.97 | 0.30 | 12.0 | 450 | - | o |
| | 2 | press fitting | 8.0 | 7.97 | 0.38 | 10.0 | 350 | - | o |
| | 3 | press fitting | 8.0 | 7.90 | 1.25 | 10.0 | 350 | - | o |
| | 4 | press fitting | 8.0 | 7.80 | 2.50 | 10.0 | 350 | - | o |
| | 5 | press fitting | 8.0 | 7.50 | 6.25 | 10.0 | 350 | - | o |
| | 6 | press fitting | 8.0 | 7.30 | 8.75 | 10.0 | 350 | - | o |
| Comparative Example | 10 | shrinkage fitting | 10.0 | 9.97 | 0.30 | 12.0 | 450 | - | - |
| | 11 | shrinkage fitting | 10.0 | 9.97 | 0.30 | 12.0 | 450 | o | - |
| | 12 | press fitting | 8.0 | 7.90 | 1.25 | 10.0 | 350 | o | - |
| | 13 | press fitting | 8.0 | 7.0 | 12.5 | 10.0 | 350 | - | - |
| | 14 | press fitting | 8.0 | 7.994 | 0.075 | 10.0 | 350 | - | o |
| | 15 | press fitting | 8.0 | 7.80 | 2.50 | 10.0 | 550 | - | - |
| | 16 | press fitting | 8.0 | 7.90 | 0.38 | 10.0 | 350 | - | - |

EP 0 157 479 B1

Table 1(b)

| Sample | No. | Hardness of metallic memeber (HRC) | | Fitting state | Extracting temperature (°C) | Extracting load (kg) | Extracting result |
|---|---|---|---|---|---|---|---|
| | | Before fitting | After precipitation hardening treatment | | | | |
| Preferred examples of the present invention | 1 | 32 | 55 | good | 350 | 520 | disengaged at fitting portion |
| | 2 | 32 | 55 | good | 350 | 600 | disengaged at fitting portion |
| | 3 | 32 | 55 | good | 350 | 1,300 | disengaged at fitting portion |
| | 4 | 32 | 55 | good | 350 | not less than 1,500 | broken at ceramic portion |
| | 5 | 32 | 55 | good | 350 | not less than 1,500 | broken at ceramic portion |
| | 6 | 32 | 55 | good | 350 | not less than 1,500 | broken at ceramic portion |
| Comparative Example | 10 | 32 | - | good | 350 | 180 | disengaged at fitting portion |
| | 11 | 55 | - | bad | - | - | |
| | 12 | 55 | - | bad | - | - | |
| | 13 | 32 | - | bad | - | - | |
| | 14 | 32 | 55 | good | 350 | 150 | disengaged at fitting portion |
| | 15 | 32 | - | bad | - | - | |
| | 16 | 32 | - | good | 350 | 200 | disengaged at fitting portion |

In Table 1, Sample Nos. 1—6 give results regarding the metal-ceramics composite articles in which the dimensional difference between the diameter of the projection of the ceramic member and the inner diameter of the hole of the metallic member, the fitting temperature, and the time period at which the metallic member was precipitation hardened fall within the preferred ranges of the present invention. Sample Nos. 10—16 are comparative examples giving results of the metal-ceramics composite articles in which the above-recited conditions fall outside of the preferred ranges of the present invention.

As clear from Table 1, the metal-ceramics composite articles according to the present invention exhibit large extracting loads at 350°C. Since the extracting load increases with the decrease in the extracting temperature, the composite article will exhibit an extracting load larger than those shown in Table 1 when the temperature of the fitting portion is at a temperature lower than 350°C. Sample Nos. 4—6 in Table 1 fractured at the ceramic portion in extracting. This means that the extracting load of the fitting portion of the sample Nos. 4—6 is higher than the tensile fracture load of the ceramic portion.

On the other hand, as clear from Sample Nos. 10 and 16 in Table 1, the extracting load of the metal-ceramics composite articles which were subjected to the extraction test without being precipitation-hardened after the metallic member and the ceramic member were fitted together are smaller than those of the metal-ceramics composite article according to the present invention. Similarly, in the case that the precipitation hardened metallic member and the ceramic member are fitted together, as shown in Sample Nos. 11—12 of Table 1, the metallic member was broken during the cooling from the fitting temperature due to the insufficient deformation of the metallic member. Further, in the case of the metal-ceramics composite article in which the dimensional difference between the projection of the ceramic member and the hole of the metallic member at the fitting portion is outside of the preferred range of the present invention, the extacting load at 350°C is too small (Table 1, Sample No. 14), or the load required for the press fitting is so large as to break the ceramic member (Table 1, Sample No. 12).

When the fitting temperature is above the preferred range of the present invention, the precipitation hardening takes place due to the heating up to the fitting temperature, so that the metallic member is hardened to increase the load required for the press fitting and the ceramic member is broken (Table 1, Sample No. 15).

## Example 2

A turbine wheel of 60 mm in diameter and a turbine shaft of 9 mm in diameter were integrally formed from silicon nitride obtained according to the pressureless sintering method to produce a ceramic member of 72 mm in total length. A projection of 6.0 mm in diameter and 19 mm in length was formed at the tip end of the turbine shaft of the ceramic member. A hole of 5.8 mm in inner diameter and 17 mm in depth was formed at one end of a solution-treated maraging steel (Hitachi Kinzoku Company Limited, YAG-300) of 70 mm in total length and 9 mm in diameter. The projection of the tip end of the turbine shaft was press fitted into the hole at 350°C to produce a turbocharger rotor in which the turbine wheel and a part of the turbine shaft were made of silicon nitride. The thus obtained turbocharger rotor was heated at 550°C for 3 hours to effect the precipitation hardening, thereby hardening the metallic member, and was then finish machined to a predetermined dimension. This turbocharger rotor was assembled into a high temperature rotation tester, and a rotation test was carried out at 150,000 rpm for 100 hours using a combustion gas. No abnormality was obversed.

## Example 3

A round plate of 69 mm in diameter and 3 mm in thickness having a projection of 15 mm in diameter and 15 mm in length a the center thereof was formed from a partially stabilized zirconia containing 5.2% of $Y_2O_3$. On the other hand, a metallic member of 35 mm in an outer diameter at a flange portion, 25 mm in outer diameter at the barrel portion, 14.7 mm in inner diameter at a hole, and 15 mm in total length was formed from the maraging steel. The projection of the zirconia ceramics was press fitted into the hole of the metallic member at 350°C to produce a metal-ceramics composite body. After a threaded portion was formed at the barrel portion of the metallic member of the metal-ceramics composite body, the precipitation hardening treatment was performed at 550°C for 3 hours, thereby hardening the metal member.

On the other hand, a hollow space partially comprising a through hole into which the thus obtained metal-ceramics composite article was to be fitted was formed at a part of a piston crown portion of a piston made of nodular graphite cast iron having a diameter of 70 mm. Then, a threaded portion formed at the through hole and the threaded portion formed at the barrel of the metallic member of the metal-ceramics composite article were fixed together to produce a heat insulating engine piston having a profile shown in Fig. 4 in which a part of the piston crown was made of the partially stabilized zirconia, while the piston body was made of the nodular graphite cast iron. When the piston was operated in a diesel engine having a diameter of 70 mm at a stroke of 75 mm and 2,200 rpm for 1 hour, no abnormality was observed.

As clear from the foregoing, according to the metal-ceramics composite article of the present invention, the metallic member is made of the precipitation hardening alloy, and the projection formed at the ceramic member is fitted into the hole formed at the metallic member in the state in which precipitation-hardening is not carried out so as to carry out the integral joining, and the thus joined composite body is subjected to the precipitation hardening treatment to cause the hardening and the contraction in volume of the metallic member, so that the joining strength is large and the wear resistance of the metallic member is excellent. Therefore, when a turbocharger rotor is made according to the present invention with the turbine wheel and a part of the turbine shaft being made of silicon nitride and a part or all of the other being made of the precipitation hardening alloy, a high efficiency turbocharger with excellent response and durability can be obtained.

Further, in a heat insulating engine piston having a part of the piston crown made of ceramics and the piston body made of the metal wherein a hollow space into which the metal-ceramics composite article according to the present invention is to be inserted is formed in the piston crown of the metal piston, and the threaded portion formed in this hollow space and the threaded portion formed at the barrel portion of the metallic member of the metal-ceramics composite article according to the present invention are fixed together, the piston crown which in use is exposed to a high temperature combustion gas can be made of ceramics with a high insulating property, thus a piston with a high heat insulating property can be obtained.

Since the cam-contacting surface of a tappet can be made of ceramics by inserting the metal-ceramics composite article according to the present invention, a tappet with an excellent wear resistance can be obtained.

As has been described, the metal-ceramics composite article according to the present invention can be used as engine parts such as turbocharger, piston, tappet, suction valve, exhaust valve, rocker arm and cam, and as structural parts which are subjected to a high temperature and repeated load, such as a refractory fixing bolt in a heating furnace, and parts for a heat treating furnace.

**Claims**

1. A metal-ceramics composite article comprising a metallic member made of a precipitation hardening alloy and a ceramic member, wherein a projection on the ceramic member is fitted into a recess or through hole in the metallic member and the metallic member is hardened by precipitation hardening.

2. A metal-ceramics composite article according to claim 1, wherein the metallic member of the metal-ceramics composite article is hardened by said precipitation hardening and a nitriding treatment, and at least a part of the surface layer of the metallic member is harder than the central portion thereof.

3. A metal-ceramics composite article according to claim 1 or claim 2, wherein the metallic member is made of a precipitation hardening alloy which contracts in volume in the precipitation hardening treatment.

4. A metal-ceramics composite article according to 2, wherein the metallic member is made of a precipitation hardening alloy the surface of which is capable of being hardened by the nitriding treatment.

5. A metal-ceramics composite article according to any one of claims 1 to 4, wherein the metallic member is made of a precipitation hardening alloy selected from maraging steel, precipitation-hardening stainless steel, and precipitation-hardenable super alloy.

6. A metal-ceramics composite article according to any one of claims 1 to 5 wherein the ceramic member is made of at least one ceramic material selected from silicon nitride, silicon carbide, sialon, alumina and partially stabilized zirconia.

7. A metal-ceramics composite article according to any one of claims 1 to 6 wherein the ceramic member is a turbine wheel and a rotary shaft at the turbine wheel side of a turbocharger rotor, and the metallic member is a rotary shaft on the compressor wheel side of the turbocharger rotor.

8. A metal-ceramics composite article according to any one of claims 1 to 6 wherein the ceramic member is a piston crown and the metallic member is a part of a piston body.

9. A metal-ceramics composite article according to any one of claims 1 to 6 wherein the ceramic member is a cam-contacting surface of a tappet and the metallic member is a part of a tappet body.

10. A process for manufacturing a metal-ceramics composite article, which comprises the steps of: fitting a projection on a ceramic member into a recess or through hole in a metallic member made of a precipitation hardening alloy which has not been subjected to precipitation-hardening to form a metal-ceramics composite body, and subjecting the thus-formed metal-ceramics composite body to a precipitation hardening treatment to harden the metallic member.

11. A process according to claim 10 which further comprises the step of subjecting the metal-ceramics composite article to a nitriding treatment to further harden at least a part of the surface of the metallic member after the precipitation hardening treatment of the metal-ceramics composite body.

12. A process according to claim 10 wherein the metal-ceramics composite body is heated up to a precipitation hardening temperature in a heating furnace in which the furnace atmosphere is a nitriding atmosphere and the metallic member is simultaneously hardened through precipitation hardening and nitriding.

13. A process according to claim 10, wherein the precipitation hardening treatment of the metal-ceramics composite body is performed after a nitriding treatment thereof.

14. A process according to any one of claims 10 to 13 wherein the projection of the ceramic member and the recess or hole of the metallic member are fitted together by press fitting.

15. A process according to claim 14, wherein the diameter of the ceramic member is larger by 0.1—10% than the inner diameter of the recess or hole of the metallic member prior to the press fitting.

16. A process according to claim 14 or claim 15 wherein the press fitting of the projection of the ceramic member and the recess or hole of the metallic member is performed at a temperature lower than the precipitation hardening temperature of the metallic member.

17. A process according to any one of claims 10 to 13 wherein the fitting of the projection of the ceramic member and the recess or hole of the metallic member is performed by shrinkage fitting or expansion fitting.

18. A process according to any one of claims 10 to 17 wherein the metallic member is made of a precipitation hardening alloy which is contracted in volume by the precipitation hardening.

19. A process according to claim 10 wherein the metallic member is made of a precipitation hardening alloy the surface of which is capable of being hardened through nitriding treatment.

20. A process according to any one of claims 10 to 19 wherein the metallic member is made of a precipitation hardening alloy selected from maraging steel, precipitation-hardenable stainless steel and precipitation-hardenable super alloy.

21. A process according to any one of claims 10 to 20 wherein the ceramic member is made of at least one ceramic material selected from silicon nitride, silicon carbide, sialon, alumina and partially stabilized zirconia.

## Patentansprüche

1. Metall-Keramik-Verbundkörper, der umfaßt ein metallisches Element aus einer Ausscheidungs-härtbaren Legierung und ein keramisches Element, bei dem ein Fortsatz auf dem keramischen Element in eine Ausnehmung oder in ein durchgehendes Loch in dem metallischen Element paßt und das metallische Element durch Ausscheidungshärtung gehärtet ist.

2. Metall-Keramik-Verbundkörper nach Anspruch 1, bei dem das metallische Element des Metall-Keramik-Verbundkörpers durch die Ausscheidungshärtung und eine Nitrierbehandlung gehärtet ist und mindestens ein Teil der Oberflächenschicht des metallischen Elements härter ist als ihr zentraler Abschnitt.

3. Metall-Keramik-Verbundkörper nach Anspruch 1 oder 2, bei dem das metallische Element aus einer Ausscheidungshärtbaren Legierung besteht, deren Volumen sich bei der Ausscheidungshärtungsbehandlung kontrahiert.

4. Metall-Keramik-Verbundkörper nach Anspruch 2, bei dem das metallische Element aus einer Ausscheidungs-härtbaren Legierung besteht, deren Oberfläche durch die Nitrierbehandlung gehärtet werden kann.

5. Metall-Keramik-Verbundkörper nach einem der Ansprüche 1 bis 4, bei dem das metallische Element aus einer Ausscheidungs-härtbaren Legierung besteht, die ausgewählt wird aus Maraging-Stahl, Ausscheidungs-härtbarem rostfreiem Stahl und Ausscheidungs-härtbarer Superlegierung.

6. Metall-Keramik-Verbundkörper nach einem der Ansprüche 1 bis 5, bei dem das keramische Element besteht aus mindestens einem keramischen Material, das ausgewählt wird aus Siliciumnitrid, Siliciumcarbid, Sialon, Aluminiumoxid und teilweise stabilisiertem Zirkoniumdioxid.

7. Metall-Keramik-Verbundkörper nach einem der Ansprüche 1 bis 6, bei dem das keramische Element ein Turbinenrad und eine Rotationswelle auf der Turbinenrad-Seite eines Turboladerrotors ist und das metallische Element eine Rotationswelle auf der Kompressorrad-Seite des Turboladerrotors ist.

8. Metall-Keramik-Verbundkörper nach einem der Ansprüche 1 bis 6, in dem das keramische Element eine Kolbenkrone ist und das metallische Element ein Teil eines Kolbenschaftes ist.

9. Metall-Keramik-Verbundkörper nach einem der Ansprüche 1 bis 6, bei dem das keramische Element eine mit einem Mitnehmer in Kontakt kommende Oberfläche eines Ventilstößels ist und das metallische Element ein Teil eines Ventilstößels-Körpers ist.

10. Verfahren zur Herstellung eines Metall-Keramik-Verbundköropers, das die folgenden Stufen umfaßt: Einpassen eines Fortsatzes auf einem keramischen Element in eine Ausnehmung oder in ein durchgehendes Loch in einem metallischen Element aus einer Ausscheidungs-härtbaren Legierung, die noch keiner Ausscheidungshärtung unterworfen worden ist, unter Bildung eines Metall-Keramik-Verbundkörpers und Durchführung einer Ausscheidungshärtungsbehandlung mit dem so gebildeten Metall-Keramik-Verbundkörper, um das metallische Element zu härten.

11. Verfahren nach Anspruch 10, das die weitere Stufe umfaßt, bei der der Metall-Keramik-Verbundkörper einer Nitrierbehandlung unterzogen wird, um mindestens einen Teil der Oberfläche des metallischen Elements weiter zu härten nach der Ausscheidungshärtungsbehandlung des Metall-Keramik-Verbundkörpers.

12. Verfahren nach Anspruch 10, bei dem der Metall-Keramik-Verbundkörper in einem Heizofen, dessen Ofenatmosphäre eine nitrierende Atmosphäre ist, bis auf eine Ausscheidungshärtungstemperatur erhitzt wird und das metallische Element gleichzeitig durch Ausscheidungshärtung und Nitrierung gehärtet wird.

13. Verfahren nach Anspruch 10, bei dem die Ausscheidungshärtungsbehandlung des Metall-Keramik-Verbundkörpers nach einer Nitrierbehandlung desselben durchgeführt wird.

14. Verfahren nach einem der Ansprüche 10 bis 13, bei dem der Fortsatz des keramischen Elements und die Ausnehmung oder das Loch in dem metallischen Element durch Einpassen unter Druck ineinander eingepaßt werden.

15. Verfahren nach Anspruch 14, bei dem der Durchmesser des keramischen Elements um 0,1 bis 10% größer ist als der innere Durchmesser der Ausnehmung oder des Loches in dem metallischen Element, bevor das Einpassen unter Druck durchgeführt wird.

16. Verfahren nach Anspruch 14, oder 15, bei dem das Einpassen unter Druck des Fortsatzes des keramischen Elements in die Ausnehmung oder in das Loch in dem metallischen Element bei einer Temperatur durchgeführt wird, die niedriger ist als die Ausscheidungshärtungstemperatur des metallischen Elements.

17. Verfahren nach einem der Ansprüche 10 bis 13, bei dem das Einpassen des Fortsatzes des keramischen Elements in die Ausnehmung oder in das Loch in dem metallischen Element durchgeführt wird durch Schrumpfungseinpassung oder Expansionseinpassung.

18. Verfahren nach einem der Ansprüche 10 bis 17, bei dem das metallische Element aus einer Ausscheidungs-härtbaren Legierung besteht, deren Volumen sich bei der Ausscheidungshärtung kontrahiert.

19. Verfahren nach Anspruch 10, bei dem das metallische Element aus einer Ausscheidungs-härtbaren Legierung besteht, deren Oberfläche durch eine Nitrierbehandlung gehärtet werden kann.

20. Verfahren nach einem der Ansprüche 10 bis 19, bei dem das metallische Element aus einer Ausscheidungs-härtbaren Legierung besteht, die ausgewählt wird aus Maraging-Stahl, Ausscheidungshärtbarem rostfreiem Stahl und Ausscheidungshärtbarer Superleigierung.

21. Verfahren nach einem der Ansprüche 10 bis 20, bei dem das keramische Element aus mindestens einem keramischen Material besteht, das ausgewählt wird aus Siliciumnitrid, Siliciumcarbid, Sialon, Aluminiumoxid und teilweise stabilsiertem Zirkoniumdioxid.

## Revendications

1. Article composite métal-céramique comprenant un élément métallique en un alliage de durcissement par précipitation et un élément céramique, dans lequel une projection sur l'élément céramique est ajustée dans un évidement ou trou traversant dans l'élément métallique et l'élément métallique est durci par durcissement par précipitation.

2. Article composite métal-céramique selon la revendication 1, dans lequel l'élément métallique de l'article composite métal-céramique est durci par ledit durcissement par précipitation et un traitement de nitruration, et au moins une partie de la couche de surface de l'élément métallique est plus dure que la partie centrale de celiu-ci.

3. Article composite métal-céramique selon la revendication 1 ou la revendication 2, dans lequel l'élément métallique est en un alliage de durcissement par précipitation qui se contracte en volume au cours du traitement de durcissement par précipitation.

4. Article composite métal-céramique selon la revendication 2, dans lequel l'élément métallique est en un alliage de durcissement par précipitation dont la surface peut être durcie par le traitement de nitruration.

5. Article composite métal-céramique selon l'une quelconque des revendications 1 à 4, dans lequel l'élément métallique est en un alliage de durcissement par précipitation choisi parmi un acier à trempe secondaire martensitique, un acier inoxydable durcissable par précipitation et un super-alliage durcissable par précipitation.

6. Article composite métal-céramique selon l'une quelconque des revendications 1 à 5, dans lequel l'élément céramique est en au moins un matériau céramique choisi parmi le nitrure de silicium, le carbure de silicium, le sialon, l'alumine et l'oxyde de zirzonium partiellement stabilisé.

7. Article composite métal-céramique selon l'une quelconque des revendications 1 à 6, dans lequel l'élément métallique est une roue de turbine et un arbre rotatif au niveau du côté de la roue de turbine d'un rotor de turbocompresseur à suralimentation, et l'élément métallique est un arbre rotatif du côté de la roue de compresseur du rotor du turbocompresseur à suralimentation.

8. Article composite métal-céramique selon l'une quelconque des revendications 1 à 6, dans lequel l'élément céramique est une couronne de piston et l'élément métallique est une partie d'un corps de piston.

9. Article composite métal-céramique selon l'une quelconque des revendications 1 à 6, dans lequel l'élément céramique est une surface de contact avec une came d'un mentionnet de came et l'élément métallique est une partie d'un corps de mentionnet de came.

10. Procédé pour fabriquer un article composite métal-céramique, qui comprend les étapes de:
ajuster une projection d'un élément céramique dans un évidement ou trou traversant dans un élément métallique en un alliage de durcissement par précipitaton qui n'a pas été soumis à un dircissement par précipitation pour former un corps composite métal-céramique, et de soumettre le corps composite métal-céramique ainsi formé à un traitement de durcissement par précipitation pour durcir l'élément métallique.

11. Procédé selon la revendication 10, qui comprend en outre l'étape de soumettre l'article composite métal-céramique à un traitement de nitruration pour durcir encore au moins une partie de la surface de l'élément métallique après le traitement de durcissement par précipitation du corps composité métal-céramique.

12. Procédé selon la revendication 10, dans lequel le corps composite métal-céramique est chauffé jusqu'à une température de durcissement par précipitation dans un four de chauffage dans lequel l'atmosphère du four est une atmosphère nitrurante et l'élément métallique est simultanément durci par durcissement par précipitation et par nitruration.

13. Procédé selon la revendication 10, dans lequel le traitement de durcissement par précipitation du corps composite métal-céramique est réalisé après un traitement de nitruration de celui-ci.

14. Procédé selon l'une quelconque des revendications 10 à 13, dans lequel la projection de l'élément céramique et l'évidement ou trou de l'élément métallique sont ajustés ensemble par ajustage par compression.

15. Procédé selon la revendication 14, dans lequel le diamètre de l'élément céramique est supérieur de 0,1—10% au diamètre interne de l'évidement ou trou de l'élément métallique avant l'ajustage par compression.

16. Procédé selon la revendication 14 ou la revendication 15, dans lequel l'ajustage par compression de la projection de l'élément céramique et de l'évidement ou trou de l'élément métallique est réalisé à une température inférieure à la température de durcissement par précipitation de l'élément métallique.

17. Procédé selon l'une quelconque des revendications 10 à 13, dans lequel l'ajustage de la projection de l'élément céramique et de l'évidement ou trou de l'élément métallique est réalisé par ajustage par retrait ou par ajustage par dilatation.

18. Procédé selon l'une quelconque des revendications 10 à 17, dans lequel l'élément métallique est en un alliage de durcissement par précipitation qui est contracté en volume par le durcissement par précipitation.

19. Procédé selon la revendication 10, dans lequel l'élément métallique est en un alliage de durcissement par précipitation dont la surface peut être durcie par traitement de nitruration.

20. Procédé selon l'une des revendications 10 à 19, dans lequel l'élément métallique est en un alliage de durcissement par précipitation choisi parmi un acier à trempe secondaire martensitique, un acier inoxydable durcissable par précipitation et un super-alliage durcissable par précipitation.

21. Procédé selon l'une quelconque des revendications 10 à 20, dans lequel l'élément céramique est en au moins un matériau céramique choisi parmi le nitrure de silicium, le carbure de silicium, le sialon, l'alumine et l'oxyde de zirconium partiellement stabilisé.

# FIG. 1

# FIG. 2

# FIG. 3

1

## FIG_4

## FIG_5

## FIG_6

## FIG. 7

## FIG. 8